# EUROPÄISCHE PATENTANMELDUNG

(11) **EP 1 008 521 A2**
(43) Veröffentlichungstag der Anmeldung: **14.06.2000**
(21) Anmeldenummer: 99811118.1
(22) Anmeldetag: 06.12.1999
(51) Int. Cl.: B65B 23/16

(54) **Vorrichtung zum Zuführen von Gruppen flachseitig aneinanderliegender, Scheibenförmiger Produkte, insbesondere Biskuits, in Verpackungsbehälter**

(30) Priorität: 09.12.1998 CH 244398
(71) Anmelder: SIG Pack Systems AG, 8222 Beringen (CH)
(72) Erfinder: Straub, Günter, 8226 Schleitheim (CH)
(74) Vertreter: Münch, Otto, Dipl.-Ing.

(57) **Zusammenfassung**

Die Vorrichtung hat ein erstes Förderorgan (1) zum Fördern der Produktegruppen (4) in Richtung A von einer Aufgabestation (2) zu einer Übergabestelle (3). Das Förderorgan (1) hat in regelmässigen Abständen nach unten paarweise abstehende Tragarme (25, 26) mit angelenkten Tragplatten (27, 28), auf denen die Gruppen (4) aufliegen. Unterhalb des ersten Förderorgans (1) ist ein zweites Förderorgan (8) angeordnet, dessen Förderrichtung B die Richtung A kreuzt. Auf dem zweiten Förderorgan (8) werden taktweise Trays (9) angeliefert, die an der Übergabestelle (3) mit den Gruppen (4) wahlweise mit flach liegenden oder hochkant stehenden Produkten (5) befüllt werden. Die Vorrichtung ist einfach im Aufbau, flexibel in der Anwendung und produkteschonend.

## Beschreibung

Aus der FR-A-2 142 471 ist eine Vorrichtung zum Beladen von Verpackungsbehältern, sogenannten Trays, mit Gruppen von flachseitig aneinanderliegenden Biskuits bekannt. Die Gruppen werden jeweils am unteren Ende eines vertikalen Vorratsschachtes durch einen Schieber mittels einer Lanze abgetrennt und von einem vertikal beweglichen Träger auf ein Gleitblech abgesenkt, auf welchem sie mittels eines weiteren Schiebers in einen bereitgestellten Tray geschoben werden. Der Tray wird gedreht und auf ein Abtransportorgan geschoben. Die Vorrichtung ist relativ kompliziert aufgebaut und wenig flexibel in der Anwendung. Die Trays können nur mit hochkant stehenden Biskuits beladen werden. Es sind viele Einzeloperationen erforderlich.

Der vorliegenden Erfindung liegt die Aufgabe zugrunde, eine Vorrichtung anzugeben, die flexibel in der Anwendung ist und einen einfachen Aufbau hat. Diese Aufgabe wird durch die Merkmalskombination der Ansprüche gelöst.

Nachfolgend wird ein Ausführungsbeispiel der Erfindung anhand der Zeichnungen erläutert. Darin zeigt:
- Figur 1: eine schematische perspektivische Ansicht,
- Figuren 2 und 3: eine schematische Seitenansicht und einen schematischen Grundriss des ersten Förderorgans,
- Figur 4: die Freiheitsgrade der einen Übergabeeinrichtung,
- Figur 5: einen schematischen Horizontalschnitt durch diese Übergabeeinrichtung, und
- Figur 6: eine Seitenansicht der anderen Übergabeeinrichtung.

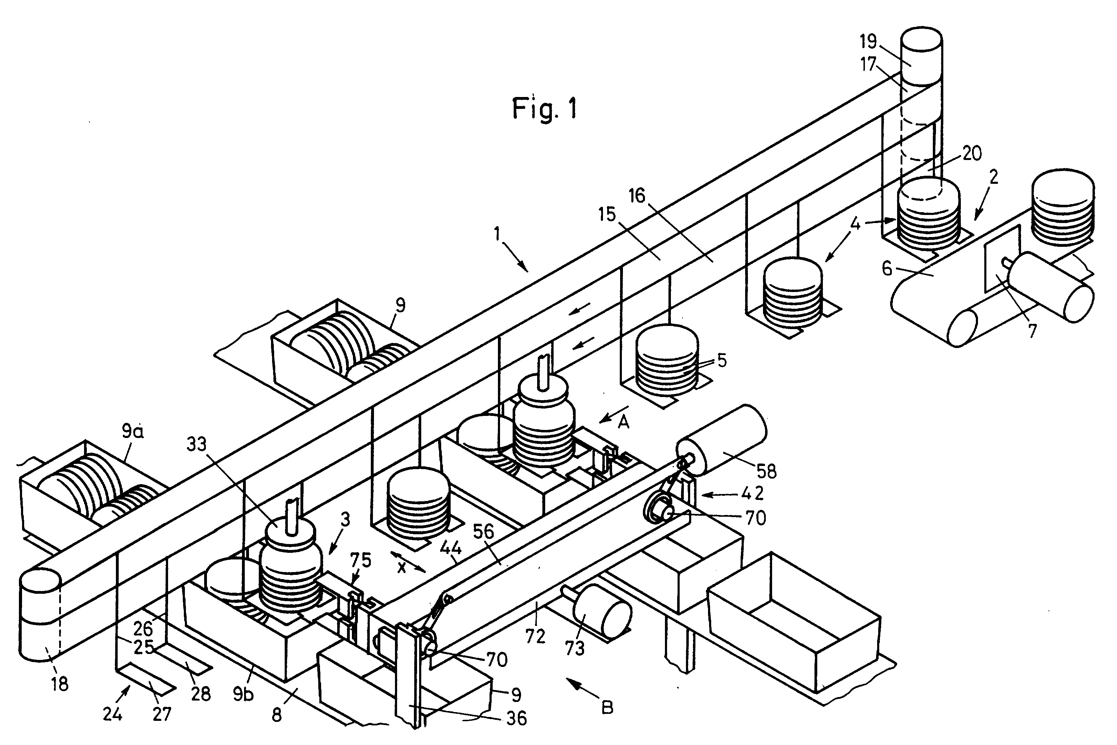

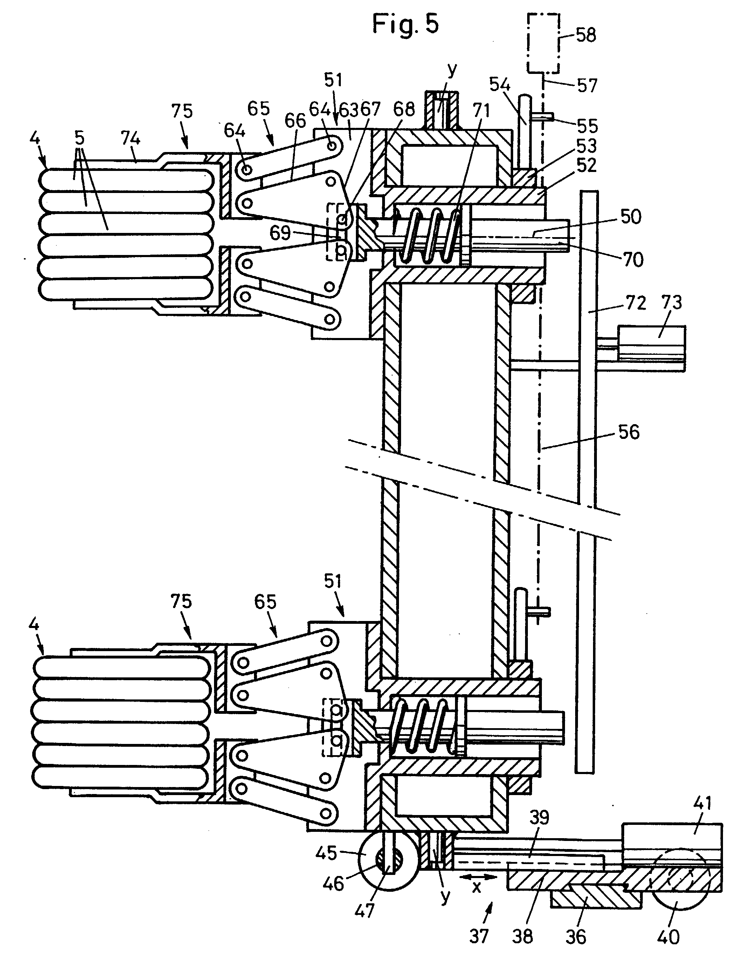

Figur 1 zeigt schematisch die erfindungsgemässe Vorrichtung. Sie umfasst ein erstes Förderorgan 1 mit einer horizontalen ersten Förderrichtung A längs einer Arbeitsstrecke zwischen einer Aufgabestelle 2 und einer Übergabestelle 3. Zur Aufgabestelle 2 werden Gruppen 4 flachseitig aufeinanderliegender, scheibenförmiger Produkte 5, insbesondere Biskuits, z.B. mittels eines Zufuhrförderbandes 6 zugeführt und mittels eines Schiebers 7 dem Förderorgan 1 übergeben. Unterhalb des Förderorgans 1 und rechtwinklig dazu ist ein zweites Förderorgan 8 mit einer horizontalen Förderrichtung B angeordnet, auf dem Verpackungsbehälter, sogenannte Trays 9, taktweise zugeführt werden. Diese Trays 9 werden an der Übergabestelle 3 auf eine von zwei Arten so befüllt, dass die Produkte 5 entweder auf der Kante stehend (dargestellt beim Tray 9a) oder flach liegend (beim Tray 9b) in den Trays 9 aufgenommen sind.

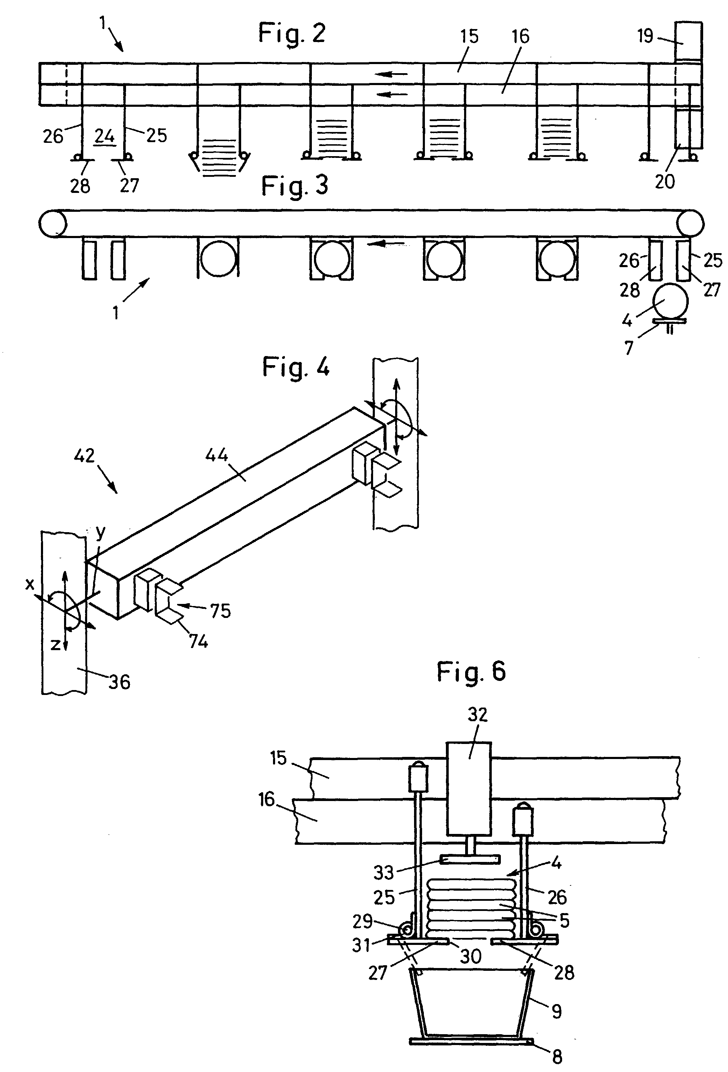

Das Förderorgan 1 hat zwei endlose, parallel übereinander angeordnete Förderer 15, 16, z.B. Zahnriemen, die über Umlenkräder 17, 18 geführt sind. Je eines der Umlenkräder 17 pro Förderer 15, 16 ist durch je einen Motor 19, 20 angetrieben. Vom Förderorgan 1 stehen in regelmässigen Abständen Tragorgane 24 nach unten ab, die aus zwei Tragarmen 25, 26 bestehen, von denen der eine am Förderer 15, der andere am Förderer 16 befestigt ist. Am unteren Ende der Arme 25, 26 sind Tragplatten 27, 28 um horizontale, quer zur Förderrichtung A gerichtete Achsen 29 aus der in Figur 6 dargestellten horizontalen Grundstellung, in welcher ihre einander zugewandten Ränder 30 Abstand voneinander haben, nach unten schwenkbar. Die Platten 27, 28 sind durch Federn 31 in die Grundstellung belastet. Wie aus Figur 6 ersichtlich ist, ist an der Übergabestelle 3 ein mittels eines Huborgans 32, z.B. eines Linearmotors, vertikal beweglicher Stössel 33 angeordnet. Wird er betätigt, stösst er die Gruppe 4 nach unten, wobei die Platten 27, 28 nach unten klappen und die Gruppe 4 in den darunter befindlichen Tray als flach liegender Stapel eingefüllt wird.

Zusätzlich zu dieser einen Übergabeeinrichtung 33 ist eine zweite Übergabeeinrichtung 42 angeordnet (Figuren 4 und 5). An zwei gestellfesten vertikalen Ständern 36 ist ein Kreuzschlitten 37 angeordnet. Auf einem an den Ständern 36 (in Figur 5 ist nur einer gezeichnet) vertikal verschiebbaren Schlitten 38 ist ein zweiter Schlitten 39 horizontal verschiebbar gelagert. Der Vertikalschlitten 38 wird mittels eines Huborgans 40 und der Horizontalschlitten 39 mittels eines Huborgans 41 betätigt. Auf dem Horizontalschlitten 39 ist ein Träger 44 um eine parallel zur Förderrichtung A verlaufende, also zur x- und z-Richtung senkrechte Achse y schwenkbar gelagert. Die Schwenkbewegung des Trägers 44 wird durch ein Huborgan 45 gesteuert, dessen Hubelement 46 an einem am Träger 44 exzentrisch zur Achse y angeordneten Zapfen 47 angreift.

Im Träger 44 sind im Abstand der Teilung der Tragorgane 24 oder einem ganzzahligen Vielfachen davon mehrere Halter 51 um Achsen 50 senkrecht zur Achse y schwenkbar gelagert. Auf einem rohrförmigen Stutzen 52 jedes Halters 51 ist ein Ring 53 befestigt, von dem ein Arm 54 absteht. In der Darstellung nach Figur 5 stehen die Arme 54 um 45° geneigt schräg nach unten aus der Zeichenebene ab. Am freien Ende der Arme 54 sind Stifte 55 befestigt. Alle Stifte 55 sind durch nur strichpunktiert angedeutete Verbindungsstangen 56 und einer von ihnen mit einem Hubelement 57 eines Huborgans 58 verbunden. Mittels dieses Huborgans 58 sind die Halter 51 alle gemeinsam aus der in Figur 5 dargestellten Endstellung um 90° in die Grundstellung nach Figuren 1 und 4 schwenkbar.

Am gegenüberliegenden Ende haben die Halter 51 einen Kopf 62 mit einem Querschlitz 63, in welchem auf Stiften 64 zwei Parallelogrammgestänge 65 gelagert sind. Je eine der Stangen 66 hat einen abgewinkelten Arm 67. Am freien Ende der gegeneinandergerichteten Arme 67 ist ein Stift 68 eingesetzt. Die Stifte 68 greifen in eine Quernut 69 eines Stössels 70 ein. Der Stössel 70 ist durch eine Feder 71 in einer Richtung belastet. Das freie Ende der Stössel 70 überragt die Halter 52. Es kann durch eine Stange 72 eingedrückt werden, die durch ein weiteres Huborgan 73 in Richtung der Achse 50 betätigbar ist. An den Parallelogrammgestängen 65 sind die beiden Greifarme 74 einer Greifzange 75 angelenkt. Durch Betätigen des Huborgans 73 öffnen sich alle Zangen 75 gleichzeitig. In der geschlossenen Stellung halten die Zangen 75 die Gruppe 4 mit einer durch die Vorspannkraft der Feder 71 vorgegebenen Kraft praktisch unabhängig von der Gruppendicke, so dass Dickentoleranzen automatisch ausgeglichen werden.

Zum Einführen der Stapel 4 in die Trays 9 in hochkant stehender Lage werden zunächst die Halter 51 mittels des Huborgans 58 in die Lage gemäss Figuren 1 und 4 gedreht und mittels des Huborgans 73 geöffnet. Das Förderorgan 1 wird in der in Figur 1 gezeigten Lage angehalten. Der Träger 44 wird in Richtung x mittels des Huborgans 41 vorgefahren und die Stange 72 zurückgezogen, so dass sich die Zangen 75 schliessen. Nun wird der Träger 44 zurückgezogen, die Zangen 75 um 90° um die Achsen 50 gedreht und um die Achse y abgeschwenkt, so dass die Gruppen 4 in die Trays 9 gelangen. Hierauf werden die Zangen geöffnet und in die Grundstellung zurückgeführt.

Die beschriebene Vorrichtung ist sehr flexibel in der Anwendung. Die Gruppen 4 können wahlweise stehend oder liegend in die Trays 9 eingefüllt werden. Die Einfülloperation erfordert nur ein einziges Handling. Durch Verstellen der Förderer 15, 16 gegeneinander kann die Vorrichtung sehr einfach an andere Produktbreiten angepasst werden. Die Bewegbarkeit des Trägers 44 in z-Richtung ermöglicht eine sehr einfache Einstellung an unterschiedliche Gruppendicken. Andererseits kann sie aber auch anstelle der Schwenkbewegung um die Achse y zur Ablage der Gruppen 4 in die Trays 9 ausgenützt werden. Die Vorrichtung ist modulartig aufgebaut. Die Produkte 5 werden schonend behandelt. Es wird eine hohe Leistung erzielt.

Abweichend von der dargestellten Ausführungsform können die beiden Förderer 15, 16 auch durch einen gemeinsamen Motor angetrieben sein, wobei eines der Umlenkräder 17 gegenüber dem anderen im Winkel verstellbar ist, z.B. über ein Differenzialgetriebe. Im dargestellten Ausführungsbeispiel nach Figur 1 sind zwei Greifer 75 und zwei Stössel 33 gezeigt. Es können jedoch beliebig viele davon nebeneinander angeordnet werden, wobei natürlich eine entsprechende Anzahl Kolonnen von Trays 9 gleichzeitig zuzuführen ist. Es können auch zwei Förderorgane 1 übereinander angeordnet werden, die über weniger als die Hälfte ihres Umfangs mit den Tragorganen 24 bestückt sind, wobei die Tragarme 25, 26 des oberen Förderorgans 1 entsprechend länger ausgebildet werden, damit alle Tragplatten 27, 28 in derselben Ebene umlaufen. Diese Variante hat den Vorteil, dass der Aufschiebetakt mit dem Schieber 7 unabhängig ist vom Übergabetakt bei der Übergabestelle 3, indem eines der beiden Förderorgane 1 bei der Station 2 und gleichzeitig das andere bei der Station 3 aktiv ist.

## Patentansprüche

1. Vorrichtung zum Zuführen von Gruppen (4) flachseitig aufeinanderliegender, scheibenförmiger Produkte (5), insbesondere Biskuits, in Verpackungsbehälter (9), umfassend:
- mindestens ein erstes Förderorgan (1) zum Fördern der Gruppen (4) in einer ersten Richtung (A) von einer Aufgabestation (2) in mindestens eine Übergabestelle (3), wobei am ersten Förderorgan (1) in Abständen Tragorgane (24) befestigt sind, die an ihrem unteren Ende in einer Grundstellung gegeneinandergerichtete, horizontale Tragplatten (27, 28) aufweisen, auf denen die Gruppen (4) aufliegen, wobei die einander zugewandten Ränder (30) der beiden Tragplatten (27, 28) Abstand voneinander haben,
- ein unterhalb des ersten Förderorgans (1) angeordnetes zweites Förderorgan (8), das die Verpackungsbehälter (9) in einer zweiten Richtung (B) zur Übergabestelle (3) transportiert und die dort gefüllten Behälter (9) wegtransportiert,
- mindestens je eine Übergabeeinrichtung (33, 42) pro Übergabestelle (3), um die Gruppen (4) von den Tragorganen (24) in die Behälter (9) einzufüllen.

2. Vorrichtung nach Anspruch 1, wobei die Tragplatten (27, 28) nach unten schwenkbar an den Tragorganen (24) angelenkt sind und an jeder Übergabestelle (3) ein Mittel (32, 33) zum Abschwenken der Tragplatten (27, 28) angeordnet ist.

3. Vorrichtung nach Anspruch 2, wobei die Tragplatten (27, 28) durch Federn (31) in ihre Grundstellung vorbelastet sind und die Übergabeeinrichtung einen vertikal beweglichen Stössel (33) umfasst, welcher die Gruppen (4) nach unten ausstösst.

4. Vorrichtung nach einem der Ansprüche 1 bis 3, wobei jede Übergabeeinrichtung (42) (zusätzlich) einen Greifer (75) mit zwei gegeneinander bewegbaren Greifarmen (74) umfasst, wobei der Greifer (75) aus einer Grundstellung horizontal quer zur ersten Richtung (A) vorschiebbar und um eine zur ersten Richtung (A) senkrechte erste Achse (50) schwenkbar ist, und wobei der Greifer (75) durch Schwenken um eine zur ersten Richtung (A) parallele zweite Achse (y) schwenkbar und/oder durch vertikale Linearverschiebung (z) absenkbar ist.

5. Vorrichtung nach Anspruch 4, wobei mehrere Greifer (75) nebeneinander auf einem gemeinsamen Träger (44) angeordnet sind, der um die zweite Achse (y) schwenkbar und/oder vertikal verschiebbar ist, wobei der Träger (44) horizontal senkrecht zur ersten Richtung (A) verschiebbar ist, und wobei das zweite Förderorgan (8) eine der Anzahl Greifer (75) entsprechende Anzahl von Kolonnen von Behältern (9) fördert.

6. Vorrichtung nach einem der Ansprüche 1 bis 5, wobei das erste Förderorgan (1) einen ersten Förderer (15) und einen zweiten Förderer (16) umfasst, die parallel zueinander und übereinander angeordnet sind, wobei die Tragorgane (24) erste Tragarme (25) und zweite Tragarme (26) haben, an denen die Tragplatten (27, 28) befestigt sind, wobei alle ersten Tragarme (25) am ersten Förderer (15) und alle zweiten Tragarme (26) am zweiten Förderer (16) befestigt sind, und wobei der erste Förderer (15) gegenüber dem zweiten Förderer (16) verstellbar ist.

7. Vorrichtung nach Anspruch 6, wobei die beiden Förderer (15, 16) durch separate Servomotoren (19, 20) mit Winkelrückführung angetrieben sind.

8. Vorrichtung nach einem der Ansprüche 1 bis 7, wobei die Übergabeeinrichtung (33, 42) durch Linearmotoren (32, 45, 58, 73) angetrieben ist.

9. Vorrichtung nach einem der Ansprüche 1 bis 8, wobei die beiden Förderrichtungen (A, B) annähernd horizontal sind.

10. Vorrichtung nach einem der Ansprüche 1 bis 9, wobei sich die beiden Förderrichtungen (A, B) annähernd rechtwinklig kreuzen.
